# EUROPEAN PATENT SPECIFICATION

(11) **EP 3 415 831 B1**
(45) Date of publication and mention of the grant of the patent: **19.07.2023**
(21) Application number: 18177429.0
(22) Date of filing: 13.06.2018
(51) Int. Cl.: F24F 11/64, F24F 11/77, F24F 110/10

(54) **COOLING FAN AUTOMATIC CONTROL SYSTEM AND COOLING FAN AUTOMATIC CONTROL DEVICE**
SYSTEM ZUR AUTOMATISCHEN KÜHLGEBLÄSESTEUERUNG UND VORRICHTUNG ZUR AUTOMATISCHEN KÜHLGEBLÄSESTEUERUNG
SYSTÈME ET DISPOSITIF DE COMMANDE AUTOMATIQUE DE VENTILATEUR DE REFROIDISSEMENT

(30) Priority: 15.06.2017 JP 2017117488
(43) Date of publication of application: 19.12.2018
(73) Proprietor: Sanyo Denki Co., Ltd., Tokyo 170-8451 (JP)
(72) Inventor: Murakami, Naoki, Tokyo 170-8451 (JP); Murakami, Masashi, Tokyo 170-8451 (JP)
(74) Representative: Mathys & Squire

(56) References cited:
- EP-A1- 2 226 507
- EP-A1- 2 813 776
- US-A1- 2014 150 480
- US-A1- 2014 323 030

## Description

### BACKGROUND

### 1. Technical Field

The present invention relates to a cooling fan automatic control system and a cooling fan automatic control device.

### 2. Related Art

Concerning a cooling fan automatic control technique for automatically controlling a plurality of fans, systems in which a plurality of fans is used have been proposed. For example, JP-A-2016-211762 describes an air-conditioning and ventilation system which includes an air-conditioning device, a ventilation device, an air-conditioning control unit, and a ventilation control unit. The air-conditioning device includes an outdoor unit and an indoor unit. The indoor unit is provided in a refrigerant circuit (RC) together with the outdoor unit, and is installed in a target space (SP). During operation, the air-conditioning device causes refrigerant to circulate through the refrigerant circuit in order to perform cooling or heating in the target space. The ventilation device includes ventilation fans for ventilation, and is installed in the target space. The air-conditioning control unit controls the operation of the air-conditioning device. The ventilation control unit is electrically connected to the ventilation device, and controls the operation of the ventilation device. When the ventilation control unit is enabled to control the operation of the ventilation device, the ventilation control unit transmits a notification signal to the air-conditioning control unit. Unless the air-conditioning control unit receives the notification signal, the air-conditioning control unit does not start the operation of the air-conditioning device.

EP 2 226 507 describes that a counter-rotating axial-flow fan 1 may be controlled as follows. A first motor and a second motor are started in a given starting mode. Then, if the temperature T of an object to be cooled is higher than a given reference temperature Tr, the rotational speed N1 of the first motor and the rotational speed N2 of the second motor are controlled in a predetermined cooling efficiency mode that gives priority to cooling the object to be cooled over the operating efficiency of the counter-rotating axial-flow fan. If the temperature T of the object to be cooled is equal to or lower than the given reference temperature Tr, the rotational speeds N1 and N2 of the first and second motors and are controlled in a predetermined operating efficiency mode that maintains the object to be cooled at a temperature equal to or lower than the given reference temperature Tr and reduces the power consumption of the counter-rotating axial-flow fan.

EP 2 813 776 describes an air conditioning system fan control method, comprising: obtaining an actual indoor temperature, and calculating a temperature difference between the actual temperature and a preset target temperature; comparing the temperature difference with threshold intervals to obtain a threshold interval where the temperature difference is located, wherein the threshold intervals are separated by several thresholds, and each threshold interval corresponds to a fan quantity value; obtaining a fan quantity value N corresponding to the threshold interval where the temperature difference is located according to correspondence between the threshold intervals and fan quantity values, where N is a natural number; and controlling N fans among all the fans to run at a first speed, and controlling fans other than the N fans among all the fans to run at a second speed, wherein the first speed is higher than the second speed, N is smaller than the total number of fans M, and M is a natural number.

US 2014/323030 describes a ventilation system including first and second blowers connected to a plenum in parallel, with a first motor drive to control a speed of an electric motor of the first blower and a second motor drive to control a speed of an electric motor of the second blower. A controller associated with the first blower is programmed to receive a set point for a controlled variable that is controllable by operation of the first and second blowers, estimate a total air flow required from the first and second blowers to reach the controlled variable set point, calculate a blower speed ratio between a first blower speed and a second blower speed that provides the required total air flow at a minimum power consumption level, and generate commands to cause the first blower and the second blower to operate at speeds resulting in the calculated blower speed ratio.

US 2014/150480 describes a cooling system which includes an air conditioner capable of cooling a predetermined space and changing an air volume or set temperature; one or more electronic devices disposed in the predetermined space and including a fan of variable rotational speed; a temperature sensor configured to detect temperature of the electronic devices; and a control apparatus configured to select, based on an increase in the detected temperature, whether to increase the air volume or decrease the set temperature of the air conditioner or to increase the rotational speed of the fan, with reference to air-conditioner information indicating a relationship between cooling performance and power consumption of the air conditioner and fan information indicating a relationship between cooling performance and power consumption of the fan.

### SUMMARY

In one aspect of the invention, there is provided a cooling fan automatic control system as set out in claim 1. The cooling fan automatic control system includes: a temperature sensor configured to measure a temperature of an object to be cooled; a plurality of current sensors configured to respectively measure power consumption by each of a plurality of cooling fans; and a controller which, when a measured temperature that is a measured value obtained by the temperature sensor is higher than a target cooling temperature of the object to be cooled, is configured to control rotational speeds of the plurality of cooling fans to decrease the rotational speeds of the plurality of cooling fans either in a pre-set order or in order from a cooling fan of which the measured current value is higher than the measured current values of the other cooling fans so as to reduce a total of measured current values of the plurality of cooling fans obtained by the plurality of current sensors while the object to be cooled is cooled using said plurality of fans.

In another aspect of the invention, there is provided a cooling fan automatic control device as set out in claim 3.

### BRIEF DESCRIPTION OF THE DRAWINGS

Fig. 1A is a functional block diagram illustrating a configuration example of a cooling fan automatic control system according to the present invention,
Fig. 1B is a functional block diagram illustrating a configuration example of a control function unit;
Fig. 2 is a flowchart illustrating the flow of processing performed by fan control software, also illustrating an example of processing for controlling the rotational speeds of fans in order from a fan with a higher current value; and
Fig. 3 is a flowchart illustrating the flow of processing performed by fan control software 1-Sa , also illustrating an example of processing for controlling the rotational speeds of fans in order from a fan with higher priority.

### DESCRIPTION OF EMBODIMENTS

In the following detailed description, for purpose of explanation, numerous specific details are set forth in order to provide a thorough understanding of the disclosed systems and devices. It will be apparent, however, that one or more systems and/or devices according to the present invention may be practiced without these specific details. In other instances, well-known structures and devices are schematically shown in order to simplify the drawing.

When a plurality of fans is used for cooling, for example, wasteful electric power may be consumed by a suboptimal combination of the rotational speeds of the fans.

An objective of the present invention is to provide a technique for automatically controlling, when a plurality of fans is used for cooling, the cooling fans in such a way as to minimize overall power consumption.

A cooling fan automatic control system according to an aspect of the present invention is provided. It includes, in particular: a temperature sensor configured to measure a temperature of an object to be cooled; a plurality of current sensors configured to measure power consumption by each of a plurality of cooling fans; and a controller which, when a measured temperature that is a measured value obtained by the temperature sensor is higher than a target cooling temperature of the object to be cooled, is configured to control rotational speeds of the plurality of cooling fans to decrease the rotational speeds of the plurality of cooling fans so as to reduce a total of measured current values of the plurality of cooling fans obtained by the plurality of current sensors.

In one option, the controller controls the plurality of cooling fans so as to decrease the rotational speeds in order from a cooling fan of which the measured current value is higher. In another option, the controller controls the plurality of cooling fans so as to decrease the rotational speeds of the plurality of cooling fans in a pre-set order.

The cooling fan automatic control system preferably further includes a storage unit configured to store, for each target cooling temperature, such a combination of the rotational speeds of the plurality of cooling fans as to minimize the total of the measured current values obtained by the plurality of current sensors. The controller preferably controls the rotational speeds of the plurality of cooling fans so as to be equal to the rotational speeds of the plurality of cooling fans stored in the storage unit.

In addition, the present invention provides a cooling fan automatic control device, including a controller configured to receive from a temperature sensor a measure of a temperature of an object to be cooled, to receive from a plurality of current sensors respective measures of current values of a plurality of cooling fans, and control, when a measured temperature of the object to be cooled is higher than a target cooling temperature, rotational speeds of the plurality of cooling fans so as to decrease the rotational speeds of the plurality of cooling fans either in a pre-set order or in order from a cooling fan of which a measured current value is higher than measured current values of the other cooling fans, and so as to reduce a total of power consumption by each of the plurality of cooling fans while the object to be cooled is cooled using said plurality of fans.

With systems and devices of the present invention it becomes possible to reduce power consumption when an object to be cooled is cooled using a plurality of fans.

In the following, a cooling fan automatic control technique according to an exemplary system of the present invention will be described with reference to the drawings.

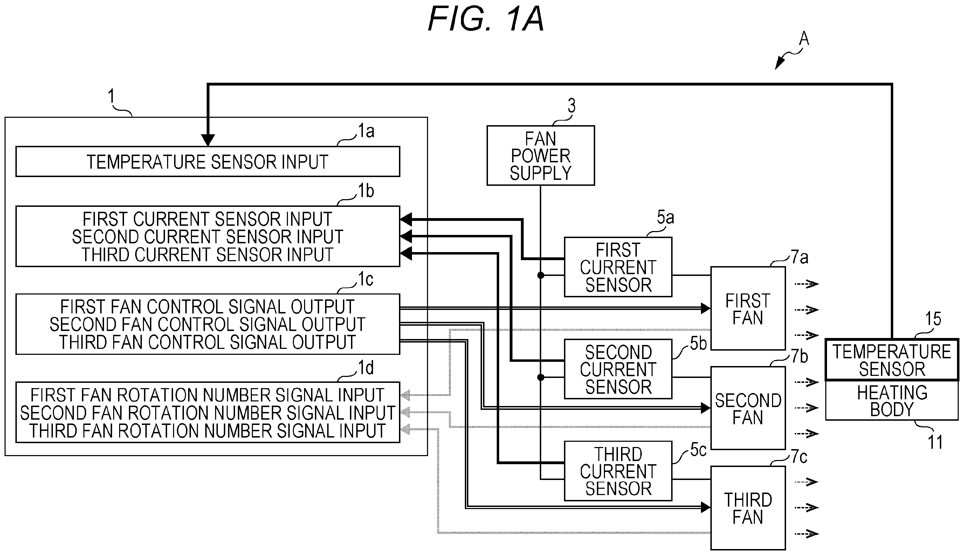

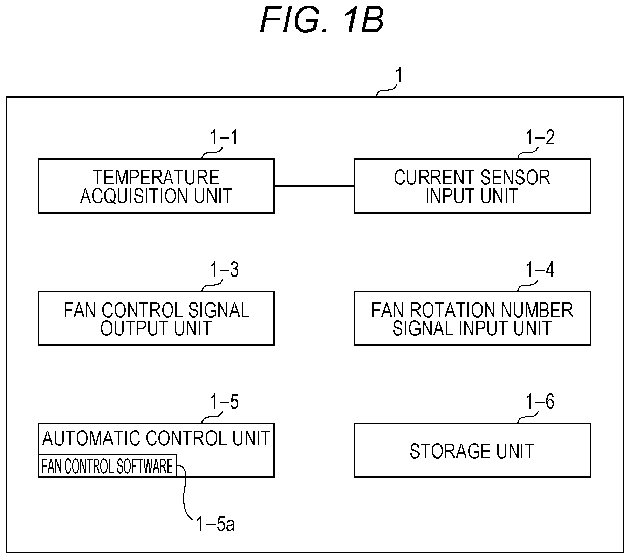

Fig. 1A is a functional block diagram illustrating a configuration example of a cooling fan automatic control system according to a first exampleof the present invention. In the present example, three cooling fans are used. The example, however, is not intended to limit the number of cooling fans. Fig. 1B is a functional block diagram illustrating a configuration example of a control function unit.

As illustrated in Fig. 1A, the exemplary cooling fan automatic control system A according to the present invention includes a temperature sensor 15, a plurality of current sensors 5a, 5b, 5c, and a controller 1. The temperature sensor 15 measures the temperature of a heating body 11 which is the object to be cooled. While in the present example, the plurality of current sensors includes the three current sensors 5a, 5b, 5c, this is not intended to be limiting. Thus, the plurality of current sensors may be denoted as a plurality of current sensors 5a, 5b, 5c, .... The plurality of current sensors 5a, 5b, 5c measures power consumption by each of a plurality of cooling fans 7a, 7b, 7c, which may include, or may be connected to, a fan power supply 3. The number of the cooling fans is not limited to three; thus, the plurality of cooling fans may be denoted as a plurality of cooling fans 7a, 7b, 7c, .... When a measured temperature is higher than a target cooling temperature of the object to be cooled, the controller 1 controls the rotational speeds of the plurality of cooling fans 7a, 7b, 7c so as to minimize the total of measured current values of the plurality of cooling fans 7a, 7b, 7c obtained by the plurality of current sensors 5a, 5b, 5c. The measured temperature is a measured value obtained by the temperature sensor 15.

The controller 1 includes a temperature sensor input 1a, a current sensor input 1b, a fan control signal output 1c, and a fan rotation number signal input 1d.

In addition, the controller 1 includes control function units illustrated in Fig. 1B. The control function units include a temperature acquisition unit 1-1, a current sensor input unit 1-2, a fan control signal output unit 1-3, a fan rotation number signal input unit 1-4, an automatic control unit 1-5, and a storage unit 1-6. In the automatic control unit 1-5, fan control software 1-Sa and the like are stored.

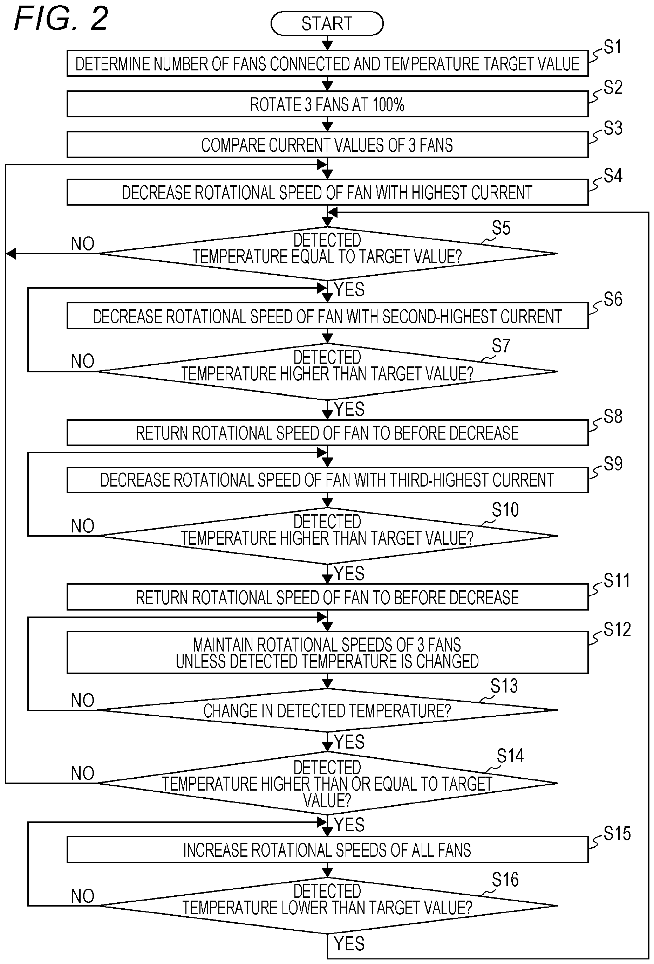

Fig. 2 is a flowchart illustrating the flow of a control process performed by the fan control software 1-5a. Fig. 2 also illustrates an example of processing for controlling the rotational speeds of the fans in order from a fan using the highest current value (i.e., the fan to which the highest current is applied). In the illustrated example, three cooling fans are provided.

As illustrated in Fig. 2, as the process is started (Start), the number of cooling fans connected and a temperature target value are determined in step S1. In step S2, the three cooling fans are rotated at 100% output (capacity).

In step S3, the current values of the three cooling fans are compared. In step S4, the rotational speed of the cooling fan to which the highest current is applied (a fan using the highest current value; a first cooling fan) is decreased. In step S5, it is determined whether a detected temperature (measured temperature) is equal to the target value. The target value is a target cooling temperature of the object to be cooled. If the result of determination in step 5 is No, the process returns to step S4. If the result of determination in step 5 is Yes, the process proceeds to step S6. In step 6, the rotational speed of the cooling fan to which the second-highest current is applied (a second cooling fan) is decreased. In step S7, it is determined whether the detected temperature is higher than the target value. If the result of determination in step S7 is No, the process returns to step S6. If the result of determination in step S7 is Yes, the process proceeds to step S8. In step 8, the rotational speed of the second cooling fan is returned to the rotational speed thereof before the decrease.

In step S9, the rotational speed of the cooling fan to which the third-highest current is applied (a third cooling fan) is decreased. In step S 10, it is determined whether the detected temperature is higher than the target value. If the result of determination in step S10 is No, the process returns to step S9.

If the result of determination in step S10 is Yes, the rotational speed of the third cooling fan is returned, in step S11, to the rotational speed thereof before the decrease. In step S12, unless the detected temperature changes, the respective rotational speeds of the three cooling fans are maintained. In step S13, it is determined whether the detected temperature has changed. If the result of determination in step S13 is No, the process returns to step S12.

If the result of determination in step S13 is Yes, it is determined in step S14 whether the detected temperature is greater than or equal to the target value. If the result of determination in step S14 is No, the process returns to step S4. If the result of determination in step S14 is Yes, the process proceeds to step S15. In step 15, the rotational speeds of all of the cooling fans are increased. In step S16, it is determined whether the detected temperature is lower than the target value. If the result of determination in step S16 is No, the process returns to step S15. If the result of determination in step S16 is Yes, the process returns to step S5.

As described above, when the measured temperature is higher than the target cooling temperature of the object to be cooled (heating body) 11, the rotational speeds of the plurality of cooling fans 7a, 7b, 7c are controlled so as to reduce the total of the measured current values of the plurality of cooling fans 7a, 7b, 7c obtained by the plurality of current sensors 5a, 5b, 5c. The measured temperature is the measured value obtained by the temperature sensor 15. Through the above-described process, it becomes possible, when a plurality of cooling fans is used, to automatically control the cooling fans so as to minimize their overall power consumption.

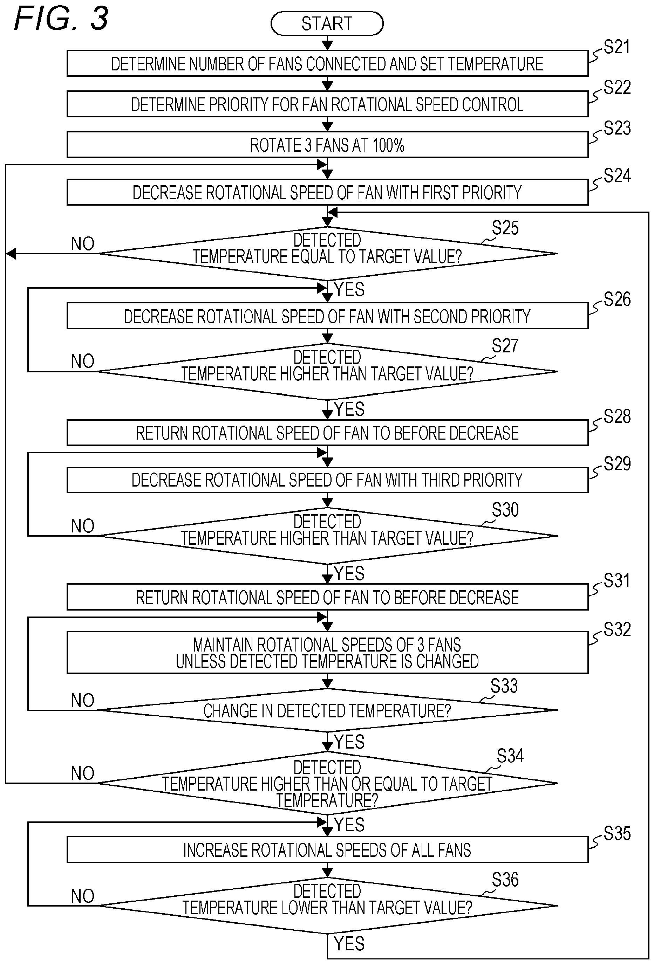

A second option of the present invention will be described. Fig. 3 is a flowchart of the flow of processing performed by the fan control software 1-Sa according to the second option of the systems according to the present invention. Specifically, Fig. 3 illustrates a processing example of rotational speed control performed in order from a fan with higher priority. In the present example, three cooling fans are provided, and the rotational speeds of the cooling fans are controlled, the cooling fans having been prioritized.

As illustrated in Fig. 3, as the process is started (Start), the number of cooling fans connected and a set temperature are determined in step S21. In step S22, the order (priority) in which the rotational speeds of the cooling fans are to be controlled is determined. In step S23, the three cooling fans are rotated at 100% output. In step S24, the rotational speed of the cooling fan of the first order (priority) is decreased. In step S25, it is determined whether the detected temperature is equal to the target value. If the result of determination in step S25 is No, the process returns to step S24. If the result of determination in step S25 is Yes, the process proceeds to step S26. In step S26, the rotational speed of the cooling fan of the second order (priority) is decreased. In step S27, it is determined whether the detected temperature is higher than the target value. If the result of determination in step S27 is No, the process returns to step S26. If the result of determination in step S27 is Yes, the process proceeds to step S28. In step S28, the rotational speed of the cooling fan of the second priority is returned to the rotational speed thereof before the decrease.

In step S29, the rotational speed of the cooling fan of the third order (priority) is decreased. In step S30, it is determined whether the detected temperature is higher than the target value. If the result of determination in step S30 is No, the process returns to step S29. If the result of determination in step S30 is Yes, the process proceeds to step S31. In step S31, the rotational speed of the cooling fan of the third priority is returned to the rotational speed thereof before the decrease. In step S32, unless the detected temperature changes, the respective rotational speeds of the three cooling fans are maintained. In step S33, upon detection of a change in the detected temperature, the process proceeds to step S34. In step S34, it is determined whether the detected temperature is greater than or equal to the target value. If the result of determination in step S34 is No, the process returns to step S24. If the result of determination in step S34 is Yes, the process proceeds to step S35. In step S35, the rotational speeds of all of the cooling fans are increased.

In step S36, it is determined whether the detected temperature is lower than the target value. If the result of determination in step S36 is No, the process returns to step S35. If the result of determination in step S36 is Yes, the process returns to step S25.

Through the above-described process, it becomes possible, when a plurality of cooling fans is used, to automatically control the cooling fans so as to minimize their overall power consumption.

In the event combinations of the rotational speeds of the three cooling fans as to reduce current values are stored in the automatic control unit 1-5 for each set temperature, then, in a subsequent control process, the rotational speeds of the three cooling fans may be controlled to be equal to the stored rotational speeds.

In this way, as long as the same system is used, it may become possible to control the rotational speeds (numbers of rotations) of the cooling fans to quickly achieve optimum rotational speeds without having to repeat the process of trial and error as previously performed using the first or second option.

In addition, by starting the control process according to the first or second option from the stored rotational speeds, it becomes possible to determine appropriate rotational speeds more quickly.

The foregoing exemplary systems and devices are not limited to the configurations illustrated in the attached drawings.

The foregoing detailed description has been presented for the purposes of illustration and description. Many modifications and variations are possible in light of the above teaching, within the limits of the appended claims.

## Claims

1. A cooling fan automatic control system (A) comprising:
a temperature sensor (15) configured to measure a temperature of an object to be cooled;
a plurality of current sensors (5a, 5b, 5c) configured to respectively measure power consumption by each of a plurality of cooling fans (7a, 7b, 7c); and
a controller (1) which, when a measured temperature that is a measured value obtained by the temperature sensor (15) is higher than a target cooling temperature of the object to be cooled, is configured to control rotational speeds of the plurality of cooling fans (7a, 7b, 7c) to decrease the rotational speeds of the plurality of cooling fans (7a, 7b, 7c) either in a pre-set order or in order from a cooling fan (7a, 7b, 7c) of which the measured current value is higher than the measured current values of the other cooling fans so as to reduce a total of measured current values of the plurality of cooling fans (7a, 7b, 7c) obtained by the plurality of current sensors (5a, 5b, 5c) while the object to be cooled is cooled using said plurality of fans.

2. The cooling fan (7a, 7b, 7c) automatic control system (A) according to claim 1, further comprising a storage unit (1-6) configured to store, for each target cooling temperature, such a combination of the rotational speeds of the plurality of cooling fans (7a, 7b, 7c) as to reduce the total of the measured current values obtained by the plurality of current sensors (5a, 5b, 5c),
wherein the controller (1) is configured to control the rotational speeds of the plurality of cooling fans (7a, 7b, 7c) so as to be equal to the rotational speeds of the plurality of cooling fans (7a, 7b, 7c) stored in the storage unit (1-6).

3. A cooling fan automatic control device, comprising a controller (1) configured to receive from a temperature sensor (15) a measure of a temperature of an object to be cooled, to receive from a plurality of current sensors (5a 5b, 5c) respective measures of current values of a plurality of cooling fans (7a, 7b, 7c), and to control, when a measured temperature of the object to be cooled is higher than a target cooling temperature, rotational speeds of the plurality of cooling fans (7a, 7b, 7c) so as to decrease the rotational speeds of the plurality of cooling fans (7a, 7b, 7c) either in a pre-set order or in order from a cooling fan (7a, 7b, 7c) of which a measured current value is higher than in the measured current values of the other cooling fans, and so as to reduce a total of power consumption by each of the plurality of cooling fans (7a, 7b, 7c) while the object to be cooled is cooled using said plurality of fans .

## Patentansprüche

1. Ein automatisches Steuerungssystem (A) für Kühlgebläse, bestehend aus:
einen Temperatursensor (15), der so konfiguriert ist, dass er die Temperatur eines zu kühlenden Objekts misst;
eine Vielzahl von Stromsensoren (5a, 5b, 5c), die so konfiguriert sind, dass sie jeweils den Stromverbrauch von jedem einer Vielzahl von Kühlgebläsen (7a, 7b, 7c) messen; und
eine Steuerung (1), die, wenn eine gemessene Temperatur, die ein von dem Temperatursensor (15) erhaltener Messwert ist, höher ist als eine Soll-Kühltemperatur des zu kühlenden Objekts, so konfiguriert ist, dass sie die Drehgeschwindigkeiten der Vielzahl von Kühlgebläsen (7a, 7b, 7c) steuert, um die Drehgeschwindigkeiten der Vielzahl von Kühlgebläsen (7a, 7b, 7c) entweder in einer voreingestellten Reihenfolge oder in der Reihenfolge eines Kühlgebläses (7a, 7b, 7c), dessen gemessener Stromwert höher ist als die gemessenen Stromwerte der anderen Kühlgebläse, zu verringern, um eine Summe der gemessenen Stromwerte der Vielzahl von Kühlgebläsen (7a, 7b, 7c), die durch die Vielzahl von Stromsensoren (5a, 5b, 5c) erhalten werden, zu reduzieren, während das zu kühlende Objekt unter Verwendung der Vielzahl von Gebläsen gekühlt wird.

2. Das automatische Steuerungssystem (A) für Kühlgebläse (7a, 7b, 7c) nach Anspruch 1, das ferner eine Speichereinheit (1-6) umfasst, die so konfiguriert ist, dass sie für jede Ziel-Kühltemperatur eine solche Kombination der Drehgeschwindigkeiten der Vielzahl von Kühlgebläsen (7a, 7b, 7c) speichert, dass die Summe der von der Vielzahl von Stromsensoren (5a, 5b, 5c) erhaltenen Strommesswerte reduziert wird,
wobei die Steuerung (1) so konfiguriert ist, dass sie die Drehzahlen der Vielzahl von Kühlgebläsen (7a, 7b, 7c) so steuert, dass sie gleich den Drehzahlen der Vielzahl von in der Speichereinheit (1-6) gespeicherten Kühlgebläsen (7a, 7b, 7c) sind.

3. Eine automatische Steuervorrichtung für Kühlgebläse, die eine Steuerung (1) umfasst, die so konfiguriert ist, dass sie von einem Temperatursensor (15) eine Messung einer Temperatur eines zu kühlenden Objekts empfängt, dass sie von einer Vielzahl von Stromsensoren (5a, 5b, 5c) entsprechende Messungen von Stromwerten einer Vielzahl von Kühlgebläsen (7a, 7b, 7c) empfängt und dass sie, wenn eine gemessene Temperatur des zu kühlenden Objekts höher ist als eine Soll-Kühltemperatur, Drehgeschwindigkeiten der Vielzahl von Kühlgebläsen (7a, 7b, 7c) so steuert, dass die Drehgeschwindigkeiten der Vielzahl von Kühlgebläsen (7a, 7b, 7c) entweder in einer vorgegebenen Reihenfolge oder in der Reihenfolge eines Kühlgebläses (7a, 7b, 7c), dessen gemessener Stromwert höher ist als die gemessenen Stromwerte der anderen Kühlgebläse, verringert werden, und so den Gesamtstromverbrauch jedes der Vielzahl von Kühlgebläsen (7a, 7b, 7c) zu verringern, während das zu kühlende Objekt unter Verwendung der mehreren Lüfter gekühlt wird.

## Revendications

1. Système de commande automatique de ventilateur de refroidissement (A) comprenant :
un capteur de température (15) configuré pour mesurer une température d'un objet devant être refroidi ;
une pluralité de capteurs de courant (5a, 5b, 5c) configurés pour mesurer respectivement une consommation d'énergie faite par chaque ventilateur d'une pluralité de ventilateurs de refroidissement (7a, 7b, 7c) ; et
un organe de commande (1) qui, lorsqu'une température mesurée qui est une valeur mesurée obtenue par le capteur de température (15) est plus élevée qu'une température de refroidissement cible de l'objet devant être refroidi, est configuré pour commander des vitesses de rotation de la pluralité de ventilateurs de refroidissement (7a, 7b, 7c) pour diminuer les vitesses de rotation de la pluralité de ventilateurs de refroidissement (7a, 7b, 7c) soit suivant un ordre prédéfini, soit suivant un ordre à partir d'un ventilateur de refroidissement (7a, 7b, 7c) dont la valeur de courant mesurée est plus élevée que les valeurs de courant mesurées des autres ventilateurs de refroidissement de sorte à réduire un total de valeurs de courant mesurées de la pluralité de ventilateurs de refroidissement (7a, 7b, 7c) obtenues par la pluralité de capteurs de courant (5a, 5b, 5c) pendant que l'objet devant être refroidi est refroidi grâce à l'utilisation de ladite pluralité de ventilateurs.

2. Système de commande automatique (A) de ventilateur de refroidissement (7a, 7b, 7c) selon la revendication 1 comprenant en outre une unité de stockage (1-6) configurée pour stocker, pour chaque température de refroidissement cible, une telle combinaison des vitesses de rotation de la pluralité de ventilateurs de refroidissement (7a, 7b, 7c) afin de réduire le total des valeurs de courant mesurées obtenues par la pluralité de capteurs de courant (5a, 5b, 5c),
dans lequel l'organe de commande (1) est configuré pour commander les vitesses de rotation de la pluralité de ventilateurs de refroidissement (7a, 7b, 7c) de sorte à ce qu'elles soient égales aux vitesses de rotation de la pluralité de ventilateurs de refroidissement (7a, 7b, 7c) stockées dans l'unité de stockage (1-6).

3. Dispositif de commande automatique de ventilateur de refroidissement, comprenant un organe de commande (1) configuré pour recevoir, à partir d'un capteur de température (15), une mesure d'une température d'un objet devant être refroidi, pour recevoir à partir d'une pluralité de capteurs de courant (5a 5b, 5c) des mesures respectives de valeurs de courant d'une pluralité de ventilateurs de refroidissement (7a, 7b, 7c), et pour commander, lorsqu'une température mesurée de l'objet devant être refroidi est plus élevée qu'une température de refroidissement cible, des vitesses de rotation de la pluralité de ventilateurs de refroidissement (7a, 7b, 7c) de sorte à diminuer les vitesses de rotation de la pluralité de ventilateurs de refroidissement (7a, 7b, 7c) soit suivant un ordre prédéfini soit suivant un ordre à partir d'un ventilateur de refroidissement (7a, 7b, 7c) dont une valeur de courant mesurée est plus élevée que les valeurs de courant mesurées des autres ventilateurs de refroidissement, et de sorte à réduire un total de consommation d'énergie faite par chaque ventilateur de la pluralité de ventilateurs de refroidissement (7a, 7b, 7c) pendant que l'objet devant être refroidi est refroidi grâce à l'utilisation de ladite pluralité de ventilateurs.
